Europäisches Patentamt

European Patent Office

Office européen des brevets

(11) Veröffentlichungsnummer: **0 284 931**
**A1**

## EUROPÄISCHE PATENTANMELDUNG

(21) Anmeldenummer: **88104417.6**

(22) Anmeldetag: **19.03.88**

(51) Int. Cl.4 **B60J 1/18** , B60J 7/12 ,
B60R 13/06

(30) Priorität: **25.03.87 DE 3709814**

(43) Veröffentlichungstag der Anmeldung:
**05.10.88 Patentblatt 88/40**

(84) Benannte Vertragsstaaten:
**AT BE CH DE ES FR GB GR IT LI LU NL SE**

(71) Anmelder: **MEHLER VARIO SYSTEM GmbH
Edelzeller Strasse 53
D-6400 Fulda(DE)**

(72) Erfinder: **Stolz, Josef
Witzelstrasse 2
D-6400 Fulda(DE)**
Erfinder: **Wiegand, Reinhold
Wachtküppelweg 15
D-6408 Hünfeld(DE)**

(74) Vertreter: **Görtz, Dr. Fuchs, Dr. Luderschmidt
Patentanwälte
Sonnenberger Strasse 100 Postfach 26 26
D-6200 Wiesbaden(DE)**

(54) **Fenster, insbesondere Heckfenster für das Verdeck eines Cabriolets.**

(57) Die Erfindung betrifft ein Fenster, insbesondere Heckfenster für ein Kraftfahrzeug mit einer entfernbaren, flexiblen Verdeckbespannung (Cabriolet), bestehend aus einem in eine Fensteröffnung in der Verdeckbespannung (1) eingefügten transparenten Fenstereinsatz (2) und Verbindungsmitteln (3) für eine abgedichtete Verbindung zwischen der Umfangskante des Fenstereinsatzes (2) und der Umlaufkante der Fensteröffnung. Die Verbindungsmittel (3) bestehen aus einem Paar komplementärer in wechselseitigem Formschluß miteinander verriegelbarer Profilstränge (11, 12, 31, 32, 51, 52). Deren gegenseitiger Eingriff ist zumindest im gespannten Zustand der Verdeckbespannung (1) von der Außenseite der Verdeckbespannung (1) her ohne Zerstörung nicht lösbar. Von den Profilsträngen ist der eine Teil fest mit der Umlaufkante der Fensteröffnung und der andere Teil fest mit der Umfangskante des Fenstereinsatzes (2) verbunden.

Fig.1

Fig.2

## Fenster, insbesondere Heckfenster für das Verdeck eines Cabriolets

Die Erfindung betrifft ein Fenster, insbesondere ein Heckfenster für ein Kraftfahrzeug mit einer entfernbaren, flexiblen Verdeckbespannung (Cabriolet), bestehend aus einem in eine Fensteröffnung in der Verdeckbespannung eingefügten transparenten Fenstereinsatz und Verbindungsmitteln für eine abgedichtete Verbindung zwischen der Umfangskante des Fenstereinsatzes und der Umlaufkante der Fensteröffnung. Die Erfindung betrifft ferner die Verwendung von vorzugsweise flexiblen Profilsträngen, die durch eine gegenseitige Verrastung oder Verriegelung eine abdichtende Längsverbindung miteinander eingehen, für die Herstellung von auswechselbaren Fenstern in der flexiblen Verdeckbespannung eines Kraftfahrzeuges.

Cabriolet-Verdecks müssen wie die Verdecks bzw. Dächer anderer Kraftfahrzeuge mit einer Heckscheibe versehen sein, die dem Fahrer den Ausblick nach hinten gestattet. Da Cabriolet-Verdecks bei offenem Fahrzeug im allgemeinen nach hinten zusammengefaltet werden, müssen auch die Heckfenster aus einem faltbaren, flexiblen Material gefertigt sein. Hierfür kommen transparente Kunststoffmischpolymerisate in Frage. Diese Werkstoffe haben gegenüber den für die Windschutzscheibe und die Seitenfenster verwendeten festen Werkstoffen, insbesondere auch im Verhältnis zur Durchschnittslebensdauer des gesamten Kraftfahrzeuges eine nur beschränkte Standfestigkeit. Diesen flexiblen Fenstermaterialien können verkratzen, so daß der Ausblick durch sie hindurch beeinträchtigt wird, sie können bei niedrigen Umgebungstemperaturen zu steif werden und zu Brüchen neigen, sie können aber auch durch ständige UV-Einstrahlung verspröden, so daß sie vorzeitig beim Falten Bruchstellen und Risse erhalten.

Diese Schäden führen dazu, daß Heckscheiben von Cabriolet-Verdecks oft vorzeitig ausgetauscht werden müssen. Dies ist mit einem erheblichen Aufwand verbunden. Im allgemeinen muß das gesamte Verdeck ausgebaut, die alte Scheibe herausgetrennt, eine neue eingenäht, eingeklebt oder eingeschweißt werden, worauf das Verdeck wieder am Fahrzeug montiert werden muß.

Aufgabe der Erfindung ist es daher, ein Fenster, insbesondere ein Heckfenster, zum Einfügen in das flexible Verdeck von Cabriolets zu schaffen, welches sich auf einfache Weise austauschen läßt, ohne daß hierfür das Verdeck des Cabriolets demontiert zu werden braucht. Zusätzliche Aufgabe der Erfindung ist es, ein Fenster solcher Art zu - schaffen, welches die üblichen Anforderungen an eine Diebstahlsicherheit erfüllt, und welches, wenn es auch schon verhältnismäßig leicht austauschbar sein soll, im geschlossenen Zustand des Fahrzeuges von außen nicht mit einfachen Mitteln entfernbar sein darf. Unter einfachen Mitteln sollen hier solche verstanden werden, die nicht zur Beschädigung oder Zerstörung des Verdecks führen. Außerdem müssen die herkömmlichen Anforderungen an solche Fenster erfüllt sein, d.h., die Verbindung zwischen Fenster und Verdeck muß zusätzlich insbesondere dicht sein, damit kein Regenwasser in das Fahrzeug eintreten kann. Die Verbindung zwischen Fenstereinsatz und Verdeckbespannung muß nach wie vor gewährleisten, daß das Verdeck erforderlichenfalls auch im Fensterbereich geknickt oder gefaltet werden kann.

Diese Aufgabe wird für ein Fenster der eingangs bezeichneten Art erfindungsgemäß dadurch gelöst, daß die Verbindungsmittel aus einem Paar komplementärer, in wechselseitigem Formschluß miteinander verriegelbarer Profilstränge bestehen, deren gegenseitiger Eingriff zumindest im gespannten Zustand der Verdeckbespannung von der Außenseite der Verdeckbespannung her ohne Zerstörung nicht lösbar ist, und von denen der eine Teil fest mit der Umlaufkante der Fensteröffnung und der andere Teil fest mit der Umlaufkante des Fenstereinsatzes verbunden ist.

Zu den miteinander verbindbaren Profilsträngen, die für die vorliegende Erfindung geeignet sind, gehören beispielsweise solche Profile, die in einer bestimmten Parallelstellung mit ihren zumindestens teilweise komplementären Profilteilen durch Gegeneinanderbewegen in eine Eingriffsstellung zusammenfügbar sind, und die sich dann durch gegenseitiges Verdrehen um eine in ihrer Längsrichtung verlaufende Achse in einer Weise miteinander verhaken oder verriegeln lassen, so daß sie bei Ausüben einer radialen Zugkraft nicht mehr voneinander trennbar sind. Solche Profilausbildungen können zusätzlich mit Raststrukturen versehen sein, die eine Rückdrehung aus der Verriegelungslage unter Überwinden der Verrastung nur unter Kraftaufwand ermöglichen. Es können auch Anschlagflächen im Profil vorgesehen sein, die ein Verdrehen der Profilstränge gegeneinander über die Verriegelungsstellung hinaus verhindern und darüber hinaus noch dazu beitragen, die Verriegelungswirkung bei einem solchen Überdrehungsversuch noch zu erhöhen.

Es sind Profile dieser Art möglich, die erst über eine bestimmte Länge zusammengefügt und dann über diese Länge gleichzeitig gegeneinander verdreht werden, verwendbar sind insbesondere aber auch solche Ausführungen, bei denen nur ein kurzes Stück zusammengefügt zu werden braucht, und die dann u.U. unter Verschiebung eines die Profilverbindung umfassenden Werkzeuges auf dem Profilstrang infolge ihrer Flexibilität stellenweise gegeneinander verdreht und fortschreitend in Art eines Reißverschlusses in die gedrehte Verriegelungsstellung gebracht werden.

Profile, die diese Merkmale aufweisen, sind z.T. bekannt. Sie werden im allgemeinen jedoch nur für gradlinige oder leicht gekrümmte Verbindungen eingesetzt und sind für die lösbare Verbindung eines Kraftfahrzeugrückfensters in der flexiblen Verdeckbespannung eines Cabriolets nicht benutzt worden. Hiergegen spricht der Umstand, daß es sich bei der Fensterverbindung um einen in sich geschlossenen, erforderlichenfalls auch starke Eckkrümmungen durchlaufenden Profilstrang handeln muß, der über den gesamten Fensterumfang eine ausreichende Abdichtung gewährleisten soll.

Bei Verwendung eines solchen Drehverriegelungsprofiles ist das erfindungsgemäße Heckfenster vorteilhafterweise so ausgebildet, daß die beiden Profilstränge nur in Eingriff miteinander gebracht werden können, wenn sich die aneinander angrenzenden Randbereiche des Fenstereinsatzes und der Verdeckbespannung unter einem Winkel befinden, der kleiner als 180° ist, wobei sich dieser Winkel an der Innenseite des Verdecks befinden soll. Wird die Anordnung nach Zusammenfügen der Profile gestreckt, so daß der Fenstereinsatz und die Verdeckbespannung im Übergangsbereich im wesentlichen in der gleichen Ebene liegen, so werden die Profilstränge in ihre Verriegelungsstellung gedreht, aus der heraus sie sich weder unter Zugspannung in der Ebene des Verdecks wie auch unter Zugspannung senkrecht dazu voneinander lösen lassen. Erst wenn die Verdeckanordnung im nicht gespannten Zustand um das Verbindungsprofil gefaltet wird, lassen sich die Profilstränge wieder voneinander lösen. Vorzugsweise erfolgt diese Lösung durch ein Falten um die Profilverbindung herum, bei dem sich die Innenseiten der aneinandergrenzenden Verdeckteile gegeneinander bewegen. Eine solche Faltung ist bei gespanntem Verdeck nur schwer möglich, während eine Faltung durch Eindrücken der Profilverbindung an einer bestimmten Stelle u.U. zum Auseinanderspringen an dieser Stelle führen könnte.

Je nachdem wie das Profil ausgeführt ist, muß zum Einfügen eines neuen Heckfensters der Faltvorgang am Umfang des Fensters fortschreitend durchgeführt werden. Dies ist bei entspanntem Verdeck und einem flexiblen Fenstermaterial durchaus möglich. Für das Lösen kann es je nach Profilausführung ausreichend sein, Fenstereinsatz und Verdeckbespannung nur an einer Langseite des Fensters gegeneinander zu falten, um die Profilverbindung nur über einen bestimmten Abschnitt zu lösen. Viele Profile, die eine genügende Flexibilität aufweisen, lassen sich dann von der Trennstelle her durch einfaches Aufziehen weiter voneinander lösen. Das Profil sollte nur derart ausgeführt sein, daß ein auch nur bereichsweises Trennen der Profilverbindung im gespannten Zustand des Verdecks nicht möglich ist.

Als Material für die Profilstränge dieser Art kommen Thermoplasten oder Elastomere in Frage. Auch sind Materialien wie PVC, Gummi und Kombinationen davon möglich, wobei diese Materialien durch Metalleinlagen, Gewebeeinlagen und dergl. verstärkt sein können.

Die Profilstränge selbst können beispielsweise durch Kleben, Nähen, Schweißen oder eine Kombination dieser Verfahren mit dem Fenstereinsatz wie auch mit der Verdeckbespannung verbunden werden.

Andere verwendbare Profilkombinationen sind beispielsweise solche, die durch einfaches Zusammendrücken miteinander verrastet oder verriegelt werden, wobei vorzugsweise beim Zusammenfügen Profilstrukturen ausgenutzt werden, die sich mit dem Gegenprofil beim Zusammendrücken zunehmend verkeilen, um dadurch eine Rückbewegung bzw. Auseinanderbewegung der mittels Hinterschneidungsstellen miteinander verrasteten Profilteile zu verhindern. Derartige Profile lassen sich beispielsweise so anordnen, daß ihre Haupttrennebene parallel zur Ebene des Fenstereinsatzes bzw. der benachbarten Verdeckbespannung verläuft. Das Profilstrangmaterial kann dabei beispielsweise die Kante des Fenstereinsatzes oder die Kante der Fensteröffnung einfassungsartig umfassen, wobei die Raststrukturen des Profils auf einer Seite des umfaßten flächigen Materials angeordnet sind. Der Fenstereinsatz wird dabei leicht überlappend mit der Kante der Verdeckbespannung ausgeführt, so daß die beiden Profilstränge zwecks gegenseitiger Verbindung in Übereinanderlage gebracht werden können. Durch Kraftausübung senkrecht zur Fenstereinsatzebene werden die Profile dann miteinander verrastet. Auch solche Profile können so ausgeführt sein, daß die Verrastungswirkung zunimmt, wenn sich die Verbindung unter Scherspannung befindet, d.h. das Verdeck sich in gespanntem Zustand befindet.

Wird ausschließlich ein solches unter Druck verbindbares Profil verwendet, kann es je nach Ausführungsart der Fall sein, daß sich dieses Profil auch bei Entspannen des Verdeckes und eventuellem Falten an der Verbindungsstelle zwischen Fenstereinsatz und Verdeckbespannung nicht ohne weiteres wieder lösen läßt. Da beim Auswechseln des Fenstereinsatzes der alte Einsatz ohnehin in der Regel verworfen wird, kann in dem am Fenstereinsatz angebrachten Profilstrang eine markierte Trennstelle vorgesehen sein, an der das Fenster aufgeschnitten und gleichzeitig der an ihm befindliche Profilstrang mit durchtrennt wird. An dieser Stelle ist dann der an der Verdeckbespannung befestigte Profilstrang derart zu verstärken, beispielsweise durch ein eingefügtes Metallteil, daß er beim Auftrennen des Fenstereinsatzes an dieser Stelle nicht beschädigt wird. Ist das Profil des Fenstereinsatzes an einer Stelle erst einmal durchtrennt, läßt es sich im allgemeinen fortschreitend aus der Verrastung mit dem anderen Profilstrang herausziehen. Der neue Fenstereinsatz kann dann durch einfaches Andrücken wieder befestigt werden.

Da die Drehverriegelungsprofile je nach der Härte oder Steifigkeit des Materials, aus dem sie ausgeführt sind, beim Zusammenfügen wie auch beim Trennen insbesondere in den Eckbereichen des Fensters gewisse Schwierigkeiten bereiten könnten, andererseits das Lösen der Druckprofile auch im entspannten Zustand des Verdecks Schwierigkeiten bereiten könnte, wenn man eine Auftrennstelle vermeiden will, können bei einer bevorzugten Ausführungsform des Fensters die beiden erwähnten Profiltypen beispielsweise in der Weise miteinander kombiniert werden, daß auf einer Langseite des Fensters ein Teil eines Drehverriegelungsprofiles verwendet wird, welches dann für den Rest des Fensterumfanges zweckmäßigerweise sogar kontinuierlich in ein Druckverbindungsprofil übergeht. Zum Lösen der Profilverbindung braucht dann lediglich im entspannten Zustand des Verdecks die Verbindungsstelle zwischen Fenstereinsatz und Verdeckbespannung gefaltet zu werden, um das Profil an dieser Stelle außer Eingriff zu bringen, wobei ein relativ scharfes Falten den Trennvorgang noch unterstützen kann. Ausgehend von dieser geöffneten Stelle kann dann der Rest der auch als Druckprofil ausgebildeten Profilverbindung durch einfaches Aufziehen gelöst werden. Das Einsetzen des neuen Fenstereinsatzes erfolgt in entsprechender Weise.

Wesentlich ist, daß die gesamte Fensteranordnung so ausgeführt ist, daß der Fenstereinsatz im gespannten Zustand des Verdecks nicht ohne weiteres abgezogen werden kann, sondern unerlaubter Zugang zum Inneren des Fahrzeuges nur durch Aufschneiden von Verdeckteilen möglich ist, wie dies auch schon bei bisherigen Ausführungen nicht verhindert werden kann.

Im Rahmen der Erfindung können neben den beispielhaft erwähnten auch andere Profilausführungen Verwendung finden, insofern sie den eingangs gestellen Forderungen entsprechen. Auch soll die Erfindung nicht nur auf Fenster im Verdeck von offenen Personenkraftwagen beschränkt sein. Die beschriebenen Fenster lassen sich in gleicher Weise auch für gespannte, flexible Verdeckanordnungen bei Nutzfahrzeugen, wie Lastkraftwagen, Traktoren und dergl. einsetzen. Je nach Bedarf und Verwendung eines geeigneten Profils ist die Erfindung auch für das Einsetzen von starren Fenstern in flexible Fahrzeugverdecks geeignet, wenn die Art des Zusammenfaltens bzw. Beseitigen des Verdecks ein Falten innerhalb des Fensterbereiches nicht erforderlich machen sollte.

Das auswechselbare Fenster für flexible Fahrzeugverdecks erleichtert und verkürzt eventuell erforderliche Austauscharbeiten erheblich, ohne daß durch die neue Ausführung die Diebstahlsicherheit des Fahrzeuges beeinträchtigt werden muß. Das aufwendige Demontieren eines Cabriolet-Verdecks für das Auswechseln eines schadhaft gewordenen Rückfensters kann bei Verwendung der erfindungsgemäßen Fenster entfallen.

Auch unter Verwendung aus anderen Anwendungsbereichen bekannter Profilverbindungen ergibt sich ein neues, auswechselbares Fenster, welches in äußerst vorteilhafter Weise die eingangs erwähnten Probleme beseitigt.

Im folgenden wird die Erfindung anhand von Ausführungsbeispielen noch näher erläutert.

Die zugehörigen Zeichnungen zeigen in

Fig. 1 ein Heckfenster in einer entfernbaren flexiblen Verdeckbespannung,

Fig. 2 eine Verbindung von Profilteilen, die durch Gegeneinanderbewegen in eine Eingriffstellung zusammenfügbar sind,

Fig. 3 eine Profilkombination, die durch einfaches Zusammendrücken miteinander verrastet oder verriegelt wird,

Fig. 4 eine Profilkombination, die durch Verrasten der Profilteile entsteht und die zusätzlich durch eine Klammer stabilisiert wird, und

Fig. 5 eine Profilkombination gemäß Fig. 4, die anstelle der Klammer durch ein Kunststoffprofil stabilisiert wird.

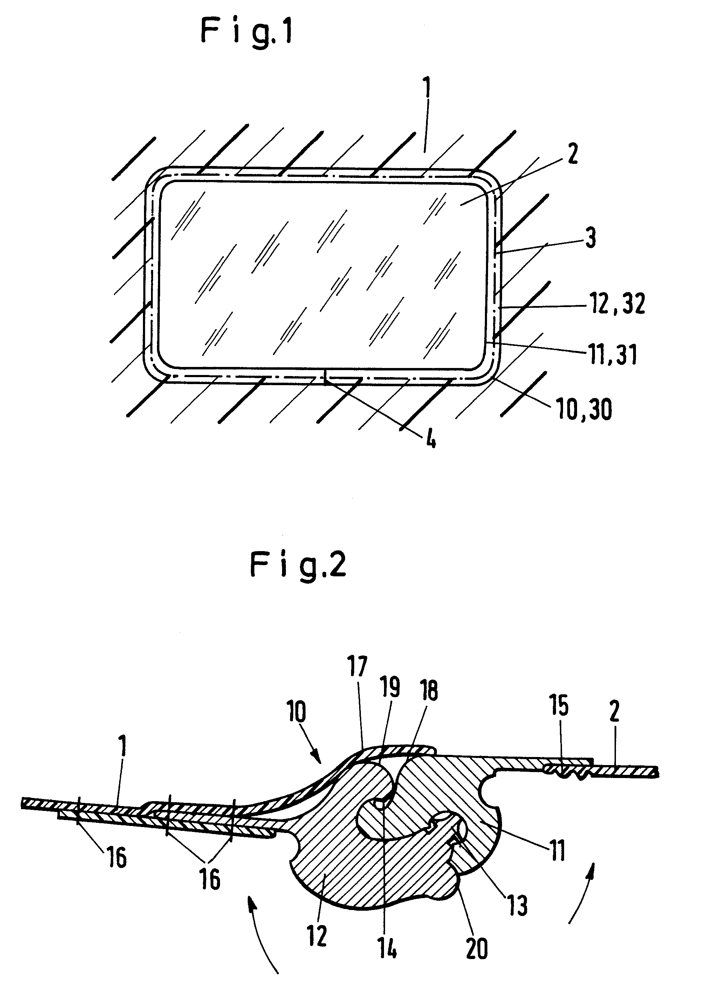

Gemäß Fig. 1 ist in eine Fensteröffnung in der Verdeckbespannung 1 ein transparenter Fenstereinsatz 2 mittels Verbindungsmitteln 3 eingefügt, die für eine dichte Verbindung zwischen der Umfangskante des Fenstereinsatzes 2 und der Umlaufkante der Fensteröffnung der Verdeckbespannung 1 sorgen.

In einer ersten Ausführungsform wird in Fig. 2 eine mögliche Profilstrangverbindung 10, bei der die Profilstränge 11 und 12 mit ihren teilweise komplementären Profilteilen durch Gegeneinanderbewegen in eine Eingriffstellung zusammenfügbar sind, gezeigt. Dazu besitzen die Profilstränge 11 und 12 Raststrukturen 13 und 14, in die diese jeweils eingreifen, wenn die Verdeckbespannung 1 und der Fenstereinsatz 2 miteinander verbunden werden. Diese Raststrukturen 13 verhaken bzw. verriegeln sich dabei durch gegenseitiges Verdrehen um eine in ihrer Längsrichtung verlaufende Achse.

Wie deutlich zu erkennen ist, läßt sich die Profilstrangverbindung 10 bei Aufbringen einer radialen Zugkraft nicht ohne weiteres voneinander trennen, da dies durch die Rastung 13 und 14 verhindert wird.

Der Profilstrang 11 bildet das Verbindungsmittel für den Fenstereinsatz 2 und Profilstrang 12 das Verbindungsmittel für die Verdeckbespannung 1. In dieser Ausführungsform ist der Fenstereinsatz 2 an seinem Rand auf den Rand 15 des Profilstranges 11 aufvulkanisiert, wogegen die Umlaufkante der Fensteröffnung der Verdeckbespannung 1 beispielsweise an den Stellen 16 vernäht wurde. Selbstverständlich können auch andere Verbindungsarten, wie Verkleben und Verschweißen, jeweils für sich oder auch kombiniert angewendet werden. Zur Schonung der Profilstrangverbindung 10 liegt das auslaufende eine Ende 17 der Verdeckbespannung 1 über den äußeren Rundungen 18, 19 der beiden Profilstränge 11 und 12. Dadurch wird auch zum großen Teil das Eindringen von Regenwasser verhindert.

Die Profilstrangverbindung 10 weist auch Anschlagflächen 20 auf, die ein Verdrehen der Profilstränge 11 und 12 gegeneinander über die Verriegelungsstellung hinaus verhindern und dadurch die Verriegelung stabilisieren.

Die beiden Profilstränge 11 und 12 werden also nur in Eingriff miteinander gebracht, wenn sich die unmittelbar aneinandergrenzenden Randbereiche des Fenstereinsatzes 2 und der Verdeckbespannung 1 unter einem Winkel kleiner als 180°, gesehen von der Innenseite des Verdecks, befinden.

Profile dieser Art können erst über eine bestimmte Länge zusammengefügt und dann über diese Länge gleichzeitig gegeneinander verdreht werden.

Nimmt die Profilstrangverbindung 10 nach Zusammenfügen ihre beabsichtigte Endstellung ein, so daß der Fenstereinsatz 2 und die Verdeckbespannung 1 annähernd in der gleichen Ebene liegen (Fig. 2), so drehen sich die Profilstränge 11 und 12 derart, daß sich ihre Raststrukturen 13 und 14 verhaken und verriegeln.

Soll nun diese Profilstrangverbindung 10 wieder gelöst werden, muß zunächst das Verdeck in den ungespannten Zustand überführt werden. Werden sie nun in die jeweilige Pfeilrichtung verdreht, so rollen die beiden Rundungen 18 und 19 der Profilstränge 11 und 12 aufeinander ab und geben zuerst die Rastung 13 und danach die Rastung 14 frei, so daß die Profilstrangverbindung 10 gelöst ist.

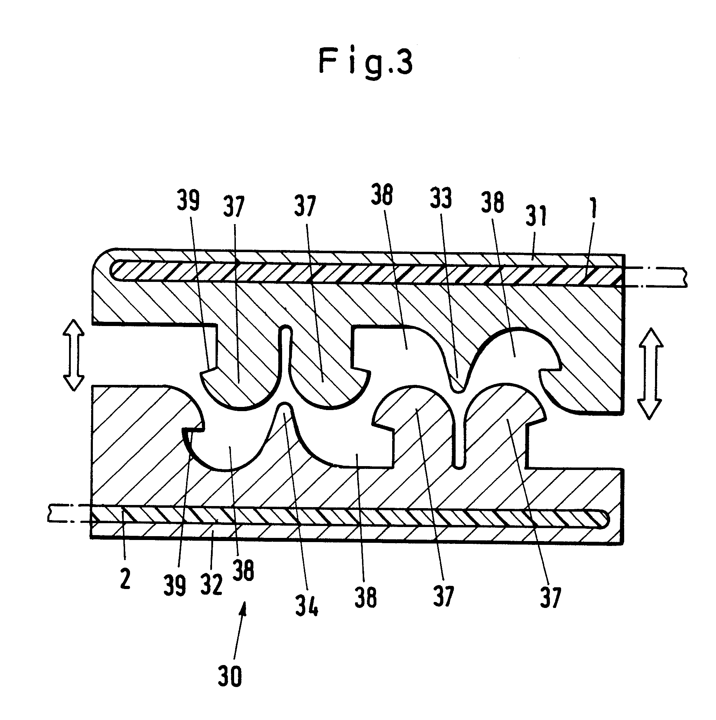

Eine weitere Profilstrangverbindung 30 ist aus Fig. 3 ersichtlich. Diese wird durch einfaches Zusammendrücken der Profilstränge 31 und 32 in Pfeilrichtung erreicht, wobei diese hauptsächlich durch Verkeilen verrastet und verriegelt werden. Als Keile dienen hierzu die Teile 33 und 34, wobei die Nuten 35 und 36 auseinandergedrückt werden.

Dies wiederum bewirkt ein seitliches Verschieben der Verrastungen 37 jeweils voneinander weg. Die Verrastungen 37 werden dadurch in ihre jeweiligen Gegenstücke 38 eingedrückt, wobei sie infolge der stetigen Verbreiterung der Keile 33 und 34 mit ihren jeweiligen Nasen 39 mit den zugehörigen Nasen ihrer Gegenstücke 38 verrasten und verhaken.

Bei einer solchen Profilstrangverbindung 30 kann es möglich sein, daß sich diese auch in entspanntem Zustand des Verdeckes und Falten an der Verbindungsstelle zwischen Verdeckbespannung 1 und Fenstereinsatz 2 nicht ohne Gewaltanwendung lösen läßt. Da aber der auszuwechselnde Fenstereinsatz 2 meistens unbrauchbar geworden ist, kann im Profilstrang 31 eine gekennzeichnete Trennstelle 4 angebracht sein. Dort kann der Fenstereinsatz 2 aufgeschnitten und der dazugehörige Profilstrang 31 mit durchgetrennt werden. Dadurch ist ein einfacheres Herauslösen des Fenstereinsatzes 2 gewährleistet.

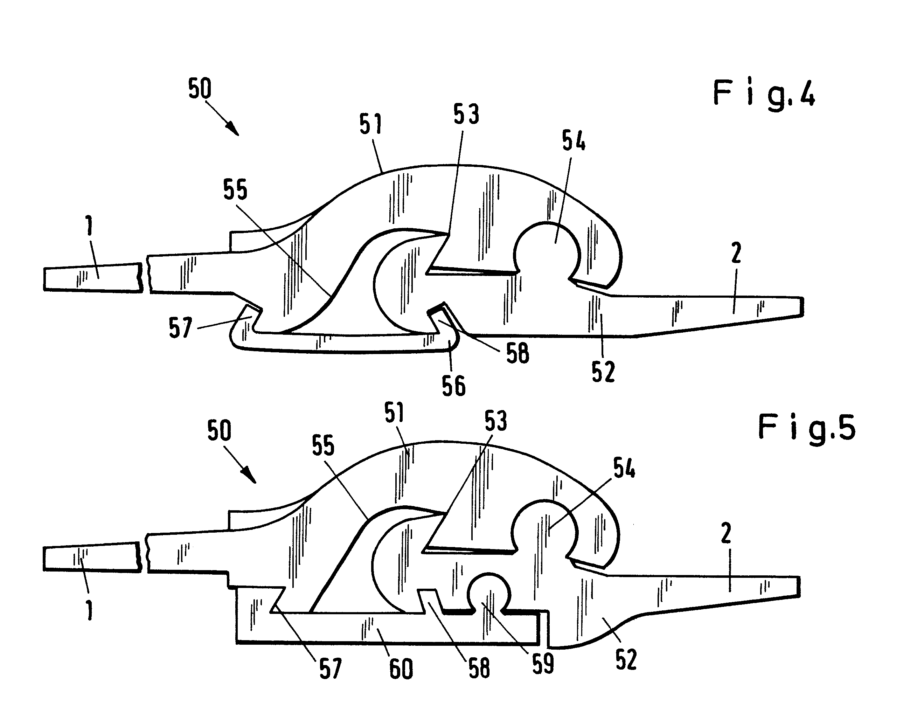

In einem weiteren Ausführungsbeispiel gemäß Fig. 4 ist eine Profilkombination gezeigt, die durch Verrasten der Profilteile entsteht und die zusätzlich durch eine Klammer stabilisiert wird. Wie in den anderen Ausführungsbeispielen, ist mit 1 die Verdeckbespannung und mit 2 der transparente Fenstereinsatz bezeichnet. Die Profilverbindung 50 selbst besteht aus Profilstrang 51 für die Verdeckbespannung 1 und Profilstrang 52 für den transparenten Fenstereinsatz 2. Auch diese Profilverbindung 50 weist entsprechende Raststrukturen 53 und 54 auf, wobei Raststruktur 53 im wesentlichen winkelförmig und Raststruktur 54 im wesentlichen kreisförmig ausgebildet ist und sich die entsprechenden Gegenstücke in dem jeweils gegenüberliegenden Profilstrang befinden. Im vorliegenden Ausführungsbeispiel ist an der Profilverbindung 50 deutlich eine Abrollfläche 55 für den Profilstrang 52 erkennbar. Wird die Rastung 54 gelöst, kann die stirnseitige Rundung des Profilstranges 52 zur vollständigen Trennung der Profilstränge 51 und 52 voneinander auf der Abrollfläche 55 abrollen.

Gegenüber den bisher gezeigten Ausführungsbeispielen wird bei dieser Profilverbindung 50 zu dessen besserer Stabilisierung eine Klammer 56 in entsprechende Aussparungen 57 und 58 angesetzt. Diese Klammer 56 verhindert noch wirksamer, die Profilstränge 51 und 52 voneinander zu lösen. Um eine solche Profilverbindung 50 zu lösen, ist schon eine extreme Gewaltanwendung notwendig, bei der mit Sicherheit die Verdeckbespannung und der transparente Fenstereinsatz mitbeschädigt würden. In einer bevorzugten Ausführungsform besteht die Klammer aus einem metallischen Werkstoff, vorzugsweise aus Federstahl. Die Klammer 56 kann sich dabei über den gesamten Umfang des Profilverlaufes erstrecken oder auch aus einzelnen Klammerelementen bestehen. Die Schenkel der Federstahlklammer 56 hintergreifen die Aussparungen 57 und 58, wobei im vorliegenden Ausführungsbeispiel lediglich die Aussparung 58 nutförmig ausgebildet ist.

Figur 5 zeigt eine ähnliche Profilkombination entsprechend Figur 4, die jedoch anstelle der Klammer 56 eine eine Zusatzrastung 59 aufweisende Kunststoffprofilschiene 60 zur Stabilisierung der Profilverbindung 50 aufweist. Diese Kunststoffprofilschiene 60 hat die gleiche Funktion wie die Federstahlklammer 56, weist jedoch zur noch weiteren Vergrößerung der Stabilität des Profils eine weitere Rastung 59 auf, bei der das im Profilstrang 52 befindliche Gegenstück ebenso über diese Rastung 59 gleitet wie bei der Rastung 54 der Profilverbindung 50. Selbstverständlich kann das Kunststoffprofil 60 auch in einer anderen Art und Weise ausgebildet sein als in diesem Ausführungsbeispiel. Wichtig ist, daß entsprechend den Ausführungsbeispielen in den Figuren 4 und 5 zur zusätzlichen Stabilisierung der Profilverbindung 50 eine zusätzliche Arretierungsschiene bzw. Arretierungsprofil nach dem Schließen des Profils vorgesehen ist.

Mit den gezeigten Ausführungsformen ist dargestellt, daß der Fenstereinsatz 2 in gespanntem Zustand des Verdecks nicht ohne Gewaltanwendung abgenommen werden kann.

## Ansprüche

1. Fenster, insbesondere Heckfenster für ein Kraftfahrzeug mit einer entfernbaren, flexiblen Verdeckbespannung (Cabriolet), bestehend aus einem in eine Fensteröffnung in der Verdeckbespannung eingefügten transparenten Fenstereinsatz und Verbindungsmitteln für eine abgedichtete Verbindung zwischen der Umfangskante des Fenstereinsatzes und der Umlaufkante der Fensteröffnung, dadurch gekennzeichnet, daß die Verbindungsmittel (3) aus einem Paar komplementärer in wechselseitigem Formschluß miteinander verriegelbarer Profilstränge (11; 12; 31; 32; 51, 52) bestehen, deren gegenseitiger Eingriff zumindest im gespannten Zustand der Verdeckbespannung (1) von der Außenseite der Verdeckbespannung (1) her ohne Zerstörung nicht lösbar ist, und von denen der eine Teil fest mit der Umlaufkante der Fensteröffnung und der andere Teil fest mit der Umfangskante des Fenstereinsatzes (2) verbunden ist.

2. Fenster nach Anspruch 1, dadurch gekennzeichnet, daß die Profilstränge (11; 12; 31; 32; 51; 52) mit ihren Profilen zusammenfügbar sind, wenn die Ebene des Fenstereinsatzes (2) und die Ebene der angrenzenden Verdeckbespannung (1) einen Winkel von kleiner 180° miteinander bilden, und daß durch gegenseitiges Verdrehen der Profilstränge (11; 12; 51, 52) um eine in ihrer Längsrichtung verlaufende Achse, bis sich der Randbereich des Fenstereinsatzes (2) und der angrenzende Bereich der Verdeckbespannung (1) im gestreckten Zustand befinden, eine Verhakung eintritt, in der die Profilstränge (11; 12; 51, 52) weder bei Zug in der gemeinsamen Ebene von Fenstereinsatz (2) und angrenzender Verdeckbespannung (1) noch in einer Richtung senkrecht dazu voneinander lösbar sind.

3. Fenster nach Anspruch 2, dadurch gekennzeichnet, daß die Profilstränge (11; 12; 51, 52) zusätzlich mit Rastprofilelementen (13; 14) versehen sind, die eine Rückdrehung um diese in ihrer Längsrichtung verlaufende Achse nur durch Entrasten unter Kraftaufwand zulassen.

4. Fenster nach einem der Ansprüche 1-3, dadurch gekennzeichnet, daß die Profile (11; 12) mit Anschlagbereichen (20) versehen sind, die ein Überdrehen um diese in ihrer Längsrichtung verlaufende Achse über die gestreckte Lage des Fenstereinsatzes (2) und der angrenzenden Verdeckbespannung (1) hinaus verhindern.

5. Fenster nach einem der Ansprüche 2-4, dadurch gekennzeichnet, daß dieser Winkel von kleiner 180° bei der Zusammenfügungsstellung der Profilstränge (11; 12; 51, 52) an der Innenseite des Verdecks liegt.

6. Fenster nach Anspruch 1, dadurch gekennzeichnet, daß die Profilstränge (31; 32; 51, 52) mit in Übereinanderlage unter Druck verriegelbaren Profilen versehen sind.

7. Fenster nach Anspruch 6, dadurch gekennzeichnet, daß die Druckverriegelungsprofile (31; 32; 51, 52) mit einer Arretierung bewirkenden Verkeilungselementen (34; 39; 53; 54) versehen sind, die eine Rückbewegung der Rastelemente aus ihrem Hinterschneidungseingriff verhindern.

8. Fenster nach Anspruch 6 oder 7, dadurch gekennzeichnet, daß die Haupttrennebene der Druckverriegelungsprofile (31; 32; 51, 52) im wesentlichen parallel zum Fenstereinsatz (2) bzw. der angrenzenden Verdeckbespannung (1) verläuft.

9. Fenster nach einem der Ansprüche 6-8, dadurch gekennzeichnet, daß im Profilstrang (32; 52) des Fenstereinsatzes (2) eine Durchtrennstelle (4) vorgesehen ist, an der der Profilstrang (31; 51) der Fensteröffnung in einer Festigkeit ausgeführt ist, die eine Beschädigung bei Verwendung eines Trennwerkzeuges verhindert.

10. Fenster nach einem der Ansprüche 2-5 und einem der Ansprüche 6-8, dadurch gekennzeichnet, daß es Dreh-und Druckverriegelungsprofile in Kombination aufweist.

11. Fenster nach Anspruch 10, dadurch gekennzeichnet, daß es an einer Längsseite einen Abschnitt eines Drehverriegelungsprofiles aufweist, welches kontinuierlich in ein Druckverriegelungsprofil übergeht.

12. Fenster nach einem der Ansprüche 1-11, dadurch gekennzeichnet, daß zumindest einer der Profilstränge aus einem thermoplastischen, Elastomer-oder Kunststoffmaterial besteht.

13. Fenster nach Anspruch 12, dadurch gekennzeichnet, daß der Profilstrang eine Metalleinlage enthält.

14. Fenster nach einem oder mehreren der Ansprüche 1-13, dadurch gekennzeichnet, daß das Profil (51; 52) zusätzlich vorzugsweise an der Innenseite des Verdecks an entsprechenden Aussparungen (57, 58) durch eine Klammer bzw. einen Klammerstrang (56) stabilisiert wird.

15. Fenster nach Anspruch 14, dadurch gekennzeichnet, daß die Klammer bzw. der Klammerstrang (56) aus einem metallischen Werkstoff, vorzugsweise Federstahl besteht.

16. Fenster nach einem oder mehreren der Ansprüche 1-13, dadurch gekennzeichnet, daß das Profil (51, 52) zusätzlich vorzugsweise an der Innenseite des Verdecks an entsprechenden Aussparungen (57, 58, 59) durch ein Kunststoffprofil (60) stabilisiert wird.

17. Verwendung von miteinander verriegelbaren bzw. miteinander verrastbaren, vorzugsweise elastischen Profilsträngen (11; 12; 31; 32; 51, 52) für die austauschbare und abdichtende Befestigung eines Fensters (2) in der faltbaren Verdeckbespannung (1) eines Kraftfahrzeuges.

18. Verwendung nach Anspruch 14, dadurch gekennzeichnet, daß Profile Anwendung finden, die aus einer Zusammenfügstellung durch gegenseitiges Verdrehen um eine in ihrer Längsrichtung verlaufende Achse in eine gegenseitige Verriegelungsstellung überführbar sind.

# Fig.1

1
2
3
12,32
11,31
10,30
4

# Fig.2

17
19 18
10
1
16
16
16
12
14
20
13
11
15
2

# Fig.3

Fig.4

Fig.5

0 284 931

Europäisches Patentamt

# EUROPÄISCHER RECHERCHENBERICHT

Nummer der Anmeldung

EP 88 10 4417

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-C- 669 585 (AUTO UNION) <br> * Seite 2, Zeilen 16-51; Figuren 1-3 * <br> --- | 1,12,17 | B 60 J 1/18 <br> B 60 J 7/12 <br> B 60 R 13/06 |
| Y | FR-A-1 388 582 (HOWARD CLAYTON-WRIGHT) <br> * Seite 3, linke Spalte, Zeilen 18-55; <br> Seite 3, rechte Spalte, Zeile 32 - <br> Seite 4, linke Spalte, Zeile 6; Figuren 1-4 * | 1,12,17 | |
| A | | 3,4,6,7 ,13,18 | |
| A | DE-A-2 657 106 (NAITO) <br> * Seite 10, Zeilen 18-29; Figuren 1,2 * <br> --- | 14,15, 16 | |
| A | DE-A-2 147 635 (FRITZMEIER) <br> * Seite 3, Zeilen 4-26; Figur 2 * <br> --- | 1,6 | |
| A | GB-A- 750 023 (WINDSHIELDS OF WORCESTER) <br> * Seite 1, Zeile 50 - Seite 2, Zeile 43; Figur 1 * <br> --- | 1 | |
| A | US-A-2 623 250 (CHILTON) <br> * Spalte 2, Zeilen 3-21; Figuren 1,2 * <br> --- | 1 | RECHERCHIERTE SACHGEBIETE (Int. Cl.4) <br><br> B 60 J <br> B 60 R <br> E 04 B |
| A | US-A-3 150 421 (LICKERT) <br> * Spalte 2, Zeilen 16-31; Figur 2 * <br> --- | 1 | |
| A | FR-A-2 132 824 (CREATORS) <br> * Seite 5, Zeile 4 - Seite 6, Zeile 34; Figuren 3,4 * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 21-06-1988 | AYITER I. |

EPO FORM 1503 03.82 (P0403)